# EUROPEAN PATENT APPLICATION

(11) **EP 1 920 688 A2**
(43) Date of publication of application: **14.05.2008**
(21) Application number: 07118090.5
(22) Date of filing: 09.10.2007
(51) Int. Cl.: A47J 37/06, A47J 37/12

(54) **Cooking apparatus and corresponding controlling method**

(30) Priority: 10.11.2006 IT MO20060365
(71) Applicant: ANGELO PO GRANDI CUCINE S.p.A., 41012 Carpi (MO) (IT)
(72) Inventor: Allesina, Giovanni, 41012 Carpi (MO) (IT)
(74) Representative: Crugnola, Pietro

(57) **Abstract**

An apparatus for cooking foods comprises cooking means (2) arranged for supporting and cooking a product, heating means (3) for transferring a cooking heat to the cooking means (2), managing and controlling means (10) for driving and controlling the heating means (3), the latter comprising a plurality of heating elements (4, 5, 6) positioned adjacent to respective portions (2a, 2b, 2c) of the cooking means (2) and selectively drivable by the managing and controlling means (10) so as to heat at least one of the portions (2a, 2b, 2c) of the cooking means (2) and or adjust the cooking heat; a method for controlling and managing an apparatus (1) for cooking foods comprising cooking means (2) for supporting and cooking the foods and a plurality of heating elements (4, 5, 6) positioned adjacent to respective portions (2a, 2b, 2c) of the cooking means (2) for transferring to the latter a cooking heat, comprises selectively activating at least one of the heating elements (4, 5, 6) for heating a respective portion (2a, 2b, 2c) of the cooking means (2) and/or to regulating the cooking heat.

## Description

The invention relates to a cooking apparatus and a corresponding managing and controlling method, in particular the invention relates to an apparatus for cooking foods and a method for controlling and managing a heating power and/or an operating temperature thereof.

Electric cooking apparatuses are known in which the heat generated by heating elements, typically electrical resistances, is transferred to cooking means, for example direct cooking plates of fry tops or braising pans or tanks of pasta cookers or fryers.

These apparatuses comprise electric and/or electronic control devices that enable the heating elements to be switched on/off and/or a maximum operating temperature to be adjusted in function of the required type of cooking.

In the case of cooking plate apparatuses, known controlling systems nevertheless enable only the entire plate to be heated whilst often only a part thereof needs to be used. In these cases, this type of operation causes a substantial waste of energy and therefore greater apparatus running costs.

Another drawback of known cooking apparatuses consists of the fact that they are unable to maintain constant the thermal regimen set at a defined operating temperature in an initial cooking step, in which a product or food to be cooked is brought into contact with the cooking means, for example plates or tanks. In effect, owing to the quantity of heat absorbed by the product, especially if the product is frozen, the temperature and therefore the heat released by the plate/tank decrease during the initial step in a consistent manner, and a certain interval of time elapses before the initial thermal regimen is able to be restored.

The temperature drop and the duration of this interval cause inevitable repercussions on the cooking quality of the product.

A typical example is in the case of a known fryer, which has a maximum oil-frying temperature normally set at 190 °C. In the initial step, immediately subsequent to the immersion of a food to be cooked, for example a frozen food, a sudden and inevitable reduction in the temperature of the oil is reported, which reduction is due to the massive subtraction of heat by the product at a lower temperature. The more the value of the temperature of the oil falls below the maximum set temperature, the poorer the cooking result is.

This drawback obviously also occurs in the other cooking apparatuses, for example the direct cooking plate apparatuses (fry-tops, braising pans).

An object of the invention is to improve known cooking apparatuses and the corresponding methods for controlling and managing a heating power and/or an operating temperature, increasing the efficiency and the functionality thereof.

Another object is to achieve an apparatus and a method that enable cooking means of the apparatus to be heated selectively, in a partial or total manner, in order to optimise the use and power consumption thereof, eliminating unnecessary waste and dissipation of energy.

A further object is to obtain an apparatus and a method for controlling in an adjustable, precise and accurate manner a heating power of the cooking means that is necessary for cooking a specific foodstuff in an optimal manner.

Still another object is to achieve an apparatus and a method that enable an operating temperature of the cooking means to be controlled in an initial step of inserting a product to be cooked, in order to contain a reduction in the temperature of said cooking means and to improve the cooking quality of the product.

In a first aspect of the invention an apparatus is provided for cooking foods, comprising cooking means arranged for supporting and cooking a product, heating means for transferring a cooking heat to said cooking means, managing and controlling means for driving and controlling said heating means, characterised in that said heating means comprises a plurality of heating elements positioned adjacent to respective portions of said cooking means, said heating elements being drivable selectively by said managing and controlling means such as to heat at least one of said respective portions of said cooking means and/or to adjust said cooking heat.

In a second aspect of the invention a method is provided for controlling and managing an apparatus for cooking foods comprising cooking means for supporting and cooking said foods and a plurality of heating elements positioned adjacent to respective portions of said cooking means to transfer a cooking heat to the latter, comprising selectively activating at least one of said heating elements to heat a respective portion of said cooking means and/or to adjust said cooking heat.

Owing to these aspects of the invention it is possible to achieve an apparatus and a corresponding managing and controlling method that enable the cooking means of the apparatus to be heated in a selective - partial or total - manner, according to the specific needs.

By activating only the necessary heating elements it is in fact possible to heat the cooking means in a localised manner, for example in the case that only a part thereof has to be used, with a consequent reduction and optimisation of power consumption.

At the same time, by selecting the number of the heating elements, for example supplied with an established unitary heating power, it is possible to obtain different levels or values of heating power, in function of the type of cooking to be performed and/or the quantity or mass of the foods to be cooked, also in this case optimising the use of the apparatus and reducing waste and dissipation of power.

In a third aspect of the invention a method is provided for controlling and managing an apparatus for cooking foods comprising cooking means for supporting and cooking said foods and heating means for heating said cooking means to an established set operating temperature, comprising heating said cooking means to a maximum temperature that is greater than said set temperature for a defined increase time, at a cooking start step in which a food to be cooked is brought into contact with said cooking means.

Owing to this aspect of the invention it is possible to obtain a method that enables an operating temperature of the cooking means of the apparatus to be controlled in an initial cooking step, such as to limit a reduction in the temperature of said cooking means and thus improve the quality of cooking.

By suitably selecting an increase value of the temperature to be added to the set temperature of the cooking means, it is in fact possible to obtain in this step a controlled decrease of the temperature to a value that is greater than or the same as a minimum acceptable temperature that does not compromise cooking quality.

The invention will be better understood and carried into effect with reference to the attached drawings, that illustrate in which embodiments of the invention are shown by way of non-limiting example, in which:
Figure 1 is a perspective schematic view of the cooking apparatus of the invention, provided with direct cooking plate means;
Figure 2 is a perspective schematic view of the apparatus in Figure 1, in which the plate means has been removed in order to better highlight heating means underneath;
Figure 3 is a perspective schematic view of the apparatus in Figure 1, in which the plate means and casing means have been removed in order to better highlight the heating means and control and management means;
Figure 4 is a diagram showing variations in the temperature of cooking means of the apparatus in Figure 1, said apparatus being controlled according to an operating mode of the method of the invention and, as shown by a dotted line, according to a traditional manner;
Figure 5 is a block diagram showing a further operating mode of the cooking apparatus.

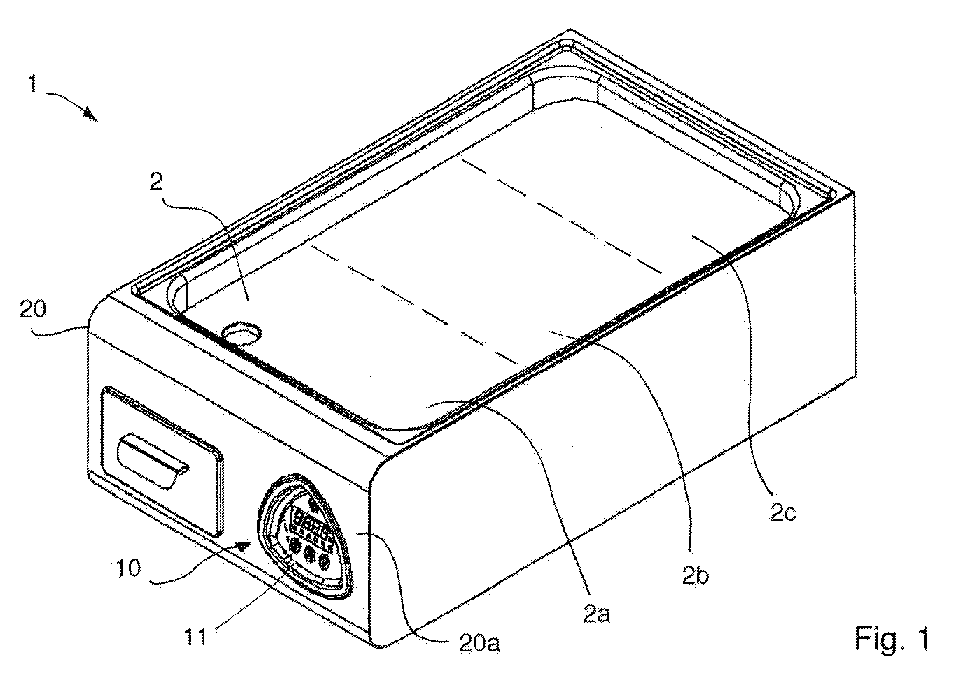

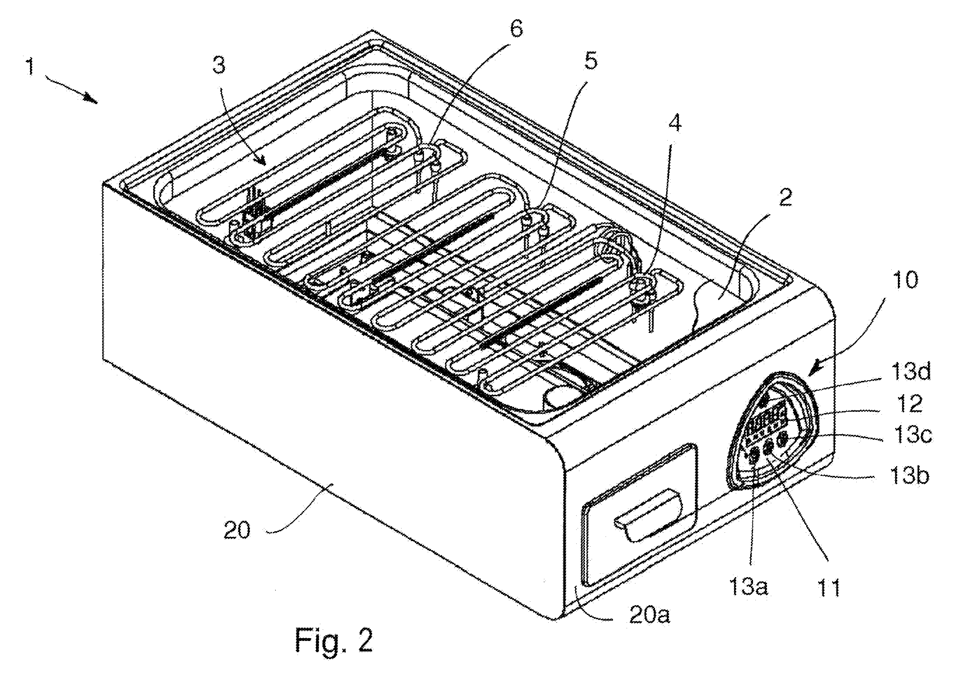

With reference to Figures 1, 2 and 3, an apparatus 1 is shown for cooking foods, in particular an apparatus of the direct-cooking plate type commonly known as "fry top".

The apparatus 1 substantially comprises cooking means 2 arranged for supporting and cooking food products, heating means 3 for transferring a cooking heat to said cooking means 2 and managing and controlling means 10 for driving and controlling said heating means 3.

The cooking means 2 substantially comprises a cooking plate, for example made of steel or glass-ceramics, below which the heating means 3 is positioned that includes a plurality of heating elements 4, 5, 6, for example three in number.

The aforesaid heating elements 4, 5, 6 are positioned adjacent to respective portions 2a, 2b, 2c of the cooking plate 2 and are activatable selectively through said managing and controlling means 10 in such a way as to heat only the portions 2a, 2b, 2c required in operation.

As explained in greater detail below in the description, it is thus possible to heat the cooking plate 2 in function of the required - partial or total - use of the plate 2.

At the same time it is possible to adjust the quantity of heat generated by the heating means 3, supplied with a heating power.

In particular, each heating element 4, 5, 6 is supplied with a unitary heating power in such a way that the total heating power of the heating means 3 is the sum of the unitary heating powers of the activated heating elements.

However, it is nevertheless provided for that the heating elements 4, 5, 6 may be sized and/or supplied with different unitary heating powers.

The heating elements 4, 5, 6 comprise respective electrical resistances placed in contact with the cooking plate 2 and connected to supply means 7, which is connected to an external electric system and controlled by the managing and controlling means 10 to supply the heating means 3 in the required manner.

The heating elements 4, 5, 6 may comprise, for example, respective electrical resistances directly brazed on the cooking plate 2.

In an embodiment of the apparatus 1 that is not shown, the cooking means 2 comprises a plurality of various cooking plates, for example made from various dimensions and/or materials, each of which is heated by one or more heating elements.

The controlling and managing means 10 comprises a control panel 11 provided with a screen or display 12, for example a liquid crystal or luminous LED display, and is provided with a plurality of selecting and driving keys or pushbuttons 13a, 13b, 13c, 13d.

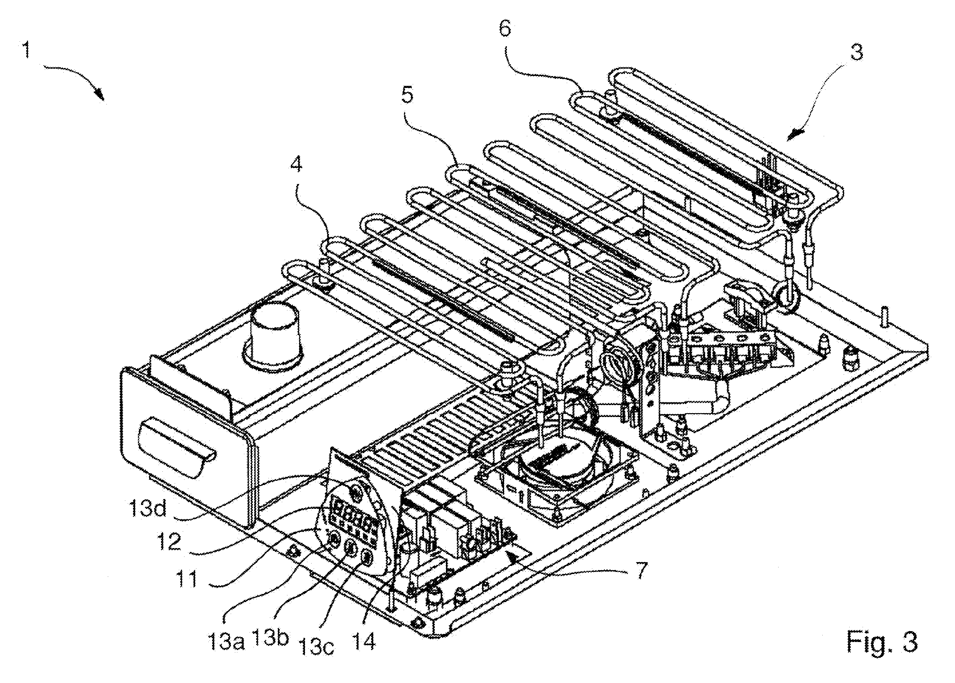

The controlling and managing means 10 further comprises an electronic control card 14 connected to the supply means 7, comprising for example a power electronic card (Figure 3).

The control panel 11 enables an operator to introduce, modify and visualize operating parameters of the apparatus 1, such as, for example, set cooking temperature, heating power, switch-on time, operating modes, etc.

The control card 14 enables these operating parameters to be exchanged with the supply means 7 through respective analogue/digital signals.

The apparatus 1 further comprises casing means 20 suitable for containing and supporting the heating means 3, the supply means 7, the controlling and managing means 10 and the cooking plate 2.

The control panel 10, in particular, is fixed to a front wall 20a of the casing means 20.

An embodiment of the apparatus is provided, that is not shown, in which the cooking means 2 comprises a tank suitable for containing a cooking liquid, for example oil or water, into which to immerse the foods to be cooked.

In this apparatus, known as a fryer or pasta cooker if operating respectively with oil or water, the heating means 3 is adjacent to or in direct contact with the tank so as to heat the latter and, therefore, the cooking liquid. In this case, by activating in a selective manner the heating elements 4, 5, 6, it is possible to adjust in a precise manner the heating power of the apparatus.

The cooking apparatus of the invention is arranged for operating according to different operating modes, on the basis of a structure of the electronic control card 14 and/or of the settings and adjustments given thereto through the control panel 10.

In a first operating mode, it is possible to set an operating temperature of the heating means 3 and, therefore, of the cooking means 2, by acting on suitable driving and selecting keys of the control panel 11.

In particular, the latter is provided with a switch-on/switch-off key 13a that enables the apparatus 1 to be switched on or off, and a first selecting key 13b and a second selecting key 13c respectively for increasing or decreasing a set operating temperature Tᵢ (°C) that the cooking means 2 has to reach during operation. The value of said set temperature Tᵢ is displayed in the screen 12.

In addition to setting an operating temperature, the controlling means 10 enables one or more portions 2a, 2b, 2c of the cooking means 2 to be heated to be selected and/or the heating power or quantity of heat to be transmitted to the foods to be set.

In the case of the direct-cooking plate apparatus ("fry top"), by selectively activating the heating elements 4, 5, 6 it is possible to heat the cooking plate 2 in a localised manner, for example in the case that only one part of the cooking plate 2 has to be used by the operator, with consequent reduction and optimation of power consumption.

At the same time, as each heating element 4, 5, 6 generates an established heating power, by activating a defined number of heating elements 4, 5, 6 it is possible to set a desired heating power, according to specific cooking needs.

In effect, during normal use of these cooking apparatuses, various heating power levels or values are required, in function of the type of cooking to be conducted and/or the quantity of mass of foods to be cooked.

For this purpose, the control panel 11 comprises an activating key 13d that enables the heating elements 4, 5, 6 to be activated, and therefore the thermal power level to be used, to be selected.

By pressing the third selecting key 13d it is possible to activate only one heating element, for example a first element 4, to obtain a first level of power equal to a third of the total power of the apparatus, if the heating elements are three in number and if they are supplied with the same unitary heating power.

By pressing again the third selecting key 13d it is possible to activate two heating elements, for example a second element 5 and a third element 6, to have a second power level equal to two thirds of the total power. Lastly, by further pressing the third selecting key 13d it is possible to activate all three heating elements 4, 5, 6, to obtain a third power level equal to the maximum power dispensable by the apparatus 1. In this way, it is possible to choose, in addition to the different levels of heating power, different combinations of portions 2a, 2b, 2c of the plate 2 to be heated.

This operating mode at different levels of heating power, which are obtainable by selectively activating the heating elements 4, 5, 6, is also usable in the operation of apparatuses in which the cooking means 2 comprises tanks containing a cooking liquid.

In an embodiment of the apparatus that is not shown, the control panel 11 comprises three distinct activating keys, each one of which is arranged for switching on/switching off a respective heating element 4, 5, 6.

The controlling and managing means 10 is further provided with a temperature increasing function that enables a particular operating mode of the apparatus 1 to be run in an initial food cooking step.

This temperature increasing mode provides for heating the heating means 3 to a maximum temperature Tₘₐₓ that is greater than the set operating temperature Tᵢ by an established increase value ΔT, for example comprised between 0° and 50° C, for a defined start-up interval of time Δtₐ.

This operating mode is particularly useful in an initial cooking step, in which a food to be cooked, for example a frozen food, is positioned on the cooking means 2 at a temperature significantly below the set temperature Ti of the cooking means 2.

In this step, as known, owing to the removal of heat by the food, there is a sudden and sharp decrease in the temperature of the cooking means 2, which leads to a temperature that may be lower than a minimum temperature Tₘᵢₙ that is still acceptable for good-quality cooking.

In the case that cooking means 2 comprises a tank containing a liquid for cooking a food, it is assumed that the temperature of said liquid coincides substantially with the temperature of the tank.

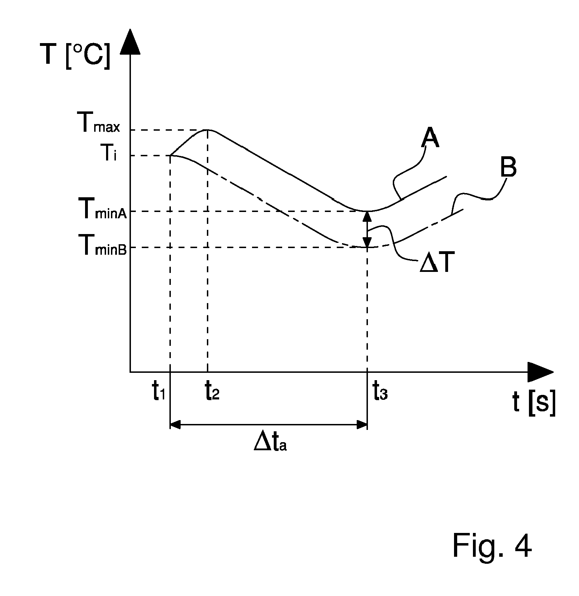

The Cartesian axes diagram in Figure 4 shows temperature variations of the cooking means 2 or of a cooking liquid of the apparatus 1 (temperature T, on the y axis) compared with time (t on the x axis), in two different operating modes.

In particular, the first curve A shows the temperature T trend of the cooking means 2 when the cooking means 2 is controlled by the managing and controlling means 10 according to the increasing temperature mode of the invention, whilst the curve B shows the temperature T trend of the cooking means 2 when controlled by the managing and controlling means 10 in a traditional manner.

According to the temperature increase mode, at a time t₁ in which the temperature of the cooking means 2 is stable and equal to the set temperature Tᵢ, for example 190°C in the case of frying, there is provided further heating of said cooking means 2 until, at the time t₂, said cooking means reaches a maximum temperature Tₘₐₓ, for example equal to 195°C, said maximum temperature Tₘₐₓ being greater than the set temperature Tᵢ by an increase value ΔT, equal to 5° C, set by the control panel 11. When the food to be cooked is introduced on the cooking means 2, at the time t₂, the temperature of the cooking means 2 decreases to a value T_{minA}, for example 175°C, at the time t₃, starting from which the temperature T of the cooking means 2 starts to increase again in order to reach, at regime, the set temperature Tᵢ.

The start-up interval Δtₐ is, for example, calculated experimentally and is, for example, equal to the time difference t₃- t₁.

It should be observed that at the time t₃ the corresponding value of the minimum temperature T_{minB} of the cooking means 2 defined by the second curve B, is approximately less than said increase value ΔT at the minimum temperature T_{minA} defined by the first curve A.

By suitably selecting the increase value ΔT of the temperature to be added to the set temperature Tᵢ of the cooking means 2, it is in this way possible to obtain in the initial cooking step a minimum temperature T_{minA} that is greater than or the same as the minimum acceptable temperature Tₘᵢₙ, so as not to compromise cooking quality, for example 175°C in the case of frying.

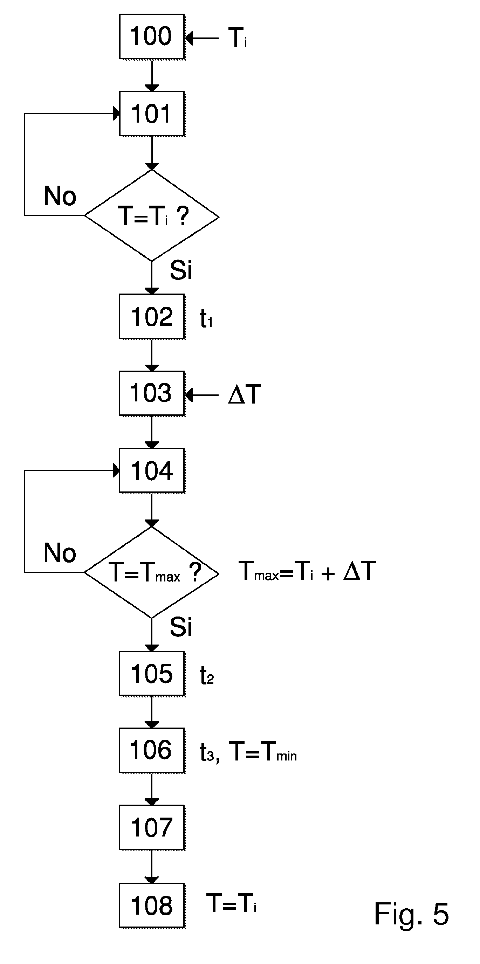

With reference to the block diagram or flow diagram of Figure 5, an operating mode of the cooking apparatus 1 is provided when the temperature increase function is activated. This further operating mode managed by the managing and controlling means 10 provides the following steps.

In an initial step 100 the set operating temperature Tᵢ is established and the heating means 3 is activated to enable heating thereof in a step 101.

When the heating means 3 reaches the set temperature Tᵢ at a time t₁, in a step 102 it is possible to activate the temperature increase function and set, in a step 103, the increase value ΔT of the temperature.

In a subsequent step 104 the heating means 3 is heated until reaching the maximum temperature Tₘₐₓ (Tₘₐₓ=T+ΔT) at the time t₂, in a step 105.

At this point the product or the products to be cooked can be inserted.

After the latter have been inserted, the heating means 3 is brought, in a step 106, to a minimum temperature Tₘᵢₙ at the time t₃.

Subsequently to or simultaneously with this step 106, the managing and controlling means 10 deactivates the temperature increase function in a step 107, since the temperature of the heating means 3 has started to rise again in order to reach, in the stability phase 108, the set temperature Tᵢ.

The managing and controlling means 10 enables the temperature increase function to be activated only when the set temperature Tᵢ is reached by the heating means 3.

Similarly, consent to starting cooking with the introduction of the foods is given by the managing and controlling means 10 only when the maximum temperature Tₘₐₓ is reached.

Legend of the block diagram in Figure 6
- 100: regulating of set operating temperature Tᵢ;
- 101: heating of heating means 3;
- 102: activating of temperature increase function at time t₁;
- 103: setting of temperature increase value ΔT;
- 104: additional heating of heating means 3;
- 105: reaching of maximum temperature Tₘₐₓ, at time t₂ and insertion of a product to be cooked;
- 106: decrease of temperature of heating means 3 to the minimum temperature Tₘᵢₙ at time t₃;
- 107: deactivation of the temperature increase function;
- 108: stable cooking of the product at the set temperature Tᵢ.

## Claims

1. Apparatus for cooking foods comprising cooking means (2) arranged for supporting and cooking a product, heating means (3) for transferring a cooking heat to said cooking means (2), managing and controlling means (10) for activating and controlling said heating means (3), **characterised in that** said heating means (3) comprises a plurality of heating elements (4, 5, 6) positioned adjacent to respective portions (2a, 2b, 2c) of said cooking means (2), said heating elements (4, 5, 6) being drivable selectively by said managing and controlling means (10) so as to heat at least one of said respective portions (2a, 2b, 2c) of said cooking means (2) and/or to adjust said cooking heat.

2. Apparatus according to claim 1, wherein said heating elements (4, 5, 6) comprise respective electrical resistances.

3. Apparatus according to claim 1 or 2, wherein said cooking means (2) comprises plate means for direct cooking of said food.

4. Apparatus according to claim 3, as appended to claim 2, wherein said electrical resistances (4, 5, 6) are fixed to said plate means (2), in particular said electrical resistances (4, 5, 6) are braze-welded.

5. Apparatus according to claim 3 or 4, wherein said plate means comprises at least a cooking plate (2).

6. Apparatus according to claim 3 or 4, wherein said plate means (2) comprises a plurality of cooking plates with each of which there is associated at least a heating element (4, 5, 6).

7. Apparatus according to claim 1 or 2, wherein said cooking means (2) comprises tank means containing a cooking liquid, in particular oil or water, in which to immerse said foods to be cooked.

8. Apparatus according to any one of claims 2 to 7, as claim 7 is appended to claim 2, comprising supply means (7), connectable to an external electric system and arranged for supplying said heating elements (4, 5, 6) with a defined heating power.

9. Apparatus according to claim 8, wherein said supply means (7) is arranged for supplying each of said heating elements (4, 5, 6) with a same unitary heating power.

10. Apparatus according to claim 8, wherein said supply means (7) is arranged for supplying said heating elements (4, 5, 6) with respective different unitary heating powers.

11. Apparatus supply means (7) is controlled by said managing and controlling means (10).

12. Apparatus according to any preceding claim, wherein said managing and controlling means (10) comprises control panel means (11) provided with screen means (12) and with key means (13a, 13b, 13c, 13d), respectively for displaying and for introducing and/or modifying operating parameters of said apparatus (1).

13. Apparatus according to claim 12, as appended to any one of claims 8 to 11, wherein said managing and controlling means (10) comprises electronic control card means (14) connected to said supply means (7) to exchange with the latter analogue and/or digital signals relating to said operating parameters.

14. Apparatus according to any one of claims 8 to 14, as claim 12 is appended to any one of claims 8 to 11, comprising casing means (20) arranged for containing and supporting said heating means (3), said supply means (7), said managing and controlling means (10) and said cooking means (2).

15. Method for controlling and managing an apparatus (1) for cooking foods comprising cooking means (2) for supporting and cooking said foods and a plurality of heating elements (4, 5, 6) positioned adjacent to respective portions (2a, 2b, 2c) of said cooking means (2) for transferring to the latter a cooking heat, comprising selectively activating at least one of said heating elements (4, 5, 6) to heat a respective portion (2a, 2b, 2c) of said cooking means (2) and/or to adjust said cooking heat.

16. Method according to claim 15, wherein said selectively activating comprises activating only one heating element (4, 5, 6) at a time.

17. Method according to claim 15, wherein said selectively activating comprises activating two or more heating elements (4, 5, 6) at a time.

18. Method according to any one of claims 15 to 17, comprising supplying said heating means (3) with a defined heating power in order to generate a corresponding cooking heat.

19. Method according to claim 18, comprising supplying each heating element (4, 5, 6) with the same unitary heating power.

20. Method according to claim 18, comprising supplying said heating elements (4, 5, 6) with respective different unitary heating powers.

21. Method according to any one of claims 15 to 20, further comprising adjusting a set operating temperature (Tᵢ) of said cooking means (2).

22. Method according to claim 21, comprising heating said cooking means (2) to a maximum temperature (Tₘₐₓ) that is greater than said set temperature (Tᵢ) for a definite increase time (Δtₐ), at an initial cooking step in which a food to be cooked is brought into contact with said cooking means (2).

23. Method according to claim 22, wherein said maximum temperature (Tₘₐₓ) is greater than said set temperature (Tᵢ) by a defined increase value (ΔT), comprised between 0°C and 50°C.

24. Method according to claim 23, wherein said increase value (ΔT) is such as to enable said cooking means (2) to reach in said initial cooking step, following contact with said food, a minimum established temperature (Tₘᵢₙ).

25. Method according to any one of claims 15 to 24, wherein said transferring said cooking heat to said cooking means (2) comprises transferring said heat to a cooking liquid, in particular oil or water, of said cooking means (2).

26. Method for controlling and managing an apparatus (1) for cooking foods comprising cooking means (2) for supporting and cooking said foods and heating means (3) for heating said cooking means (2) to an established set operating temperature (Tᵢ), comprising heating said cooking means (2) to a maximum temperature (Tₘₐₓ) that is greater than said set temperature (Tᵢ) for a defined increase time (Δtₐ) at a cooking start step in which said foods to be cooked are brought into contact with said cooking means (2).

27. Method according to claim 26, wherein said maximum temperature (Tₘₐₓ) is greater than said established set operating temperature (Tᵢ) by a defined increase value (ΔT) comprised between 0°C and 50°C.

28. Method according to claim 27, wherein said defined increase value (ΔT) is such as to enable said cooking means (2) to reach in said initial cooking step, following contact with said food, an established minimum temperature (Tₘᵢₙ).

29. Method according to any one of claims 26 to 28, wherein said heating said cooking means (2) comprises supplying said heating means (3) with a defined heating power to generate and transfer to said cooking means (2) a corresponding cooking heat.

30. Method according to claim 29, further comprising adjusting said heating power.

31. Method according to claim 30, wherein said adjusting said heating power comprises selectively activating heating elements (4, 5, 6) of said heating means (3).

32. Method according to claim 31, further comprising selectively activating at least one of said heating elements (4, 5, 6) to heat a respective portion (2a, 2b, 2c) of said cooking means (2).

33. Method according to claim 31 or 32, wherein said selectively activating comprises activating only one heating element (4, 5, 6) at a time.

34. Method according to claim 31 or 32, wherein said selectively activating comprises activating two or more heating elements (4, 5, 6) at a time.

35. Method according to any one of claims 31 to 34, comprising supplying each heating element (4, 5, 6) with a same unitary heating power.

36. Method according to any one of claims 31 to 34, comprising supplying said heating elements (4, 5, 6) with respective different unitary heating powers.

37. Method according to any one of claims 26 to 36, wherein said heating said cooking means (2) comprises heating a cooking liquid, in particular oil or water, of said cooking means (2).
